# EUROPEAN PATENT APPLICATION

(11) **EP 3 029 255 A1**
(43) Date of publication of application: **08.06.2016**
(21) Application number: 15446505.8
(22) Date of filing: 27.11.2015
(51) Int. Cl.: E06B 1/60

(54) **LEVEL SCREW**

(30) Priority: 03.12.2014 SE 1451469
(71) Applicant: ESSVE Produkter AB, 164 07 Kista (SE)
(72) Inventor: LINDBERG, Christofer, 164 07 Kista (SE); SVENSSON, Jonas, 164 07 Kista (SE)
(74) Representative: Zacco Sweden AB

(57) **Abstract**

The present invention relates to a frame screw (1) comprising; a tip portion (3), a shaft (5) comprising threads (7), and a head portion (9). The head portion (9) comprises; a rear portion (11) having a recess (25) adapted to fit to a mounting tool, and a front portion (13) comprising nut shaped side walls (15) adapted to fit to an adjustment tool. The rear portion (11) of the head portion (9) comprises a circumferential support projection (17). The projection (17) comprising a rear side (19), a circumferential edge (21), and a front side (23), wherein the projection (17) extends substantially radially.

## Description

### TECHNICAL FIELD

The present invention relates to a level screw adapted for adjusting a building element such as a window frame or door frame when mounting said frame to an adjacent transom with a gap there between.

### TECHNICAL BACKGROUND

When mounting window frames in buildings special mounting methods and fastening elements needs to be used to ensure that the doors and windows can be manoeuvred as intended after the mounting of said building elements is performed. The frame must be mounted in such a way that it is fixated in relation to the corresponding door or window with a large enough gap for said door or window to be opened and closed smoothly but be adjustable in regards to the adjacent transoms to achieve this effect.

Depending on the situation and the materials used there are a plurality of mounting techniques and fasting elements to use. Two of the most common ones for the mounting itself are frame screws and frame sleeves which can be mounted in the frame in such a way that the frame is adjustable in regards to the adjacent transom but leave a gap there between. The final mounted frame must also be mechanically secured and stable so the window retains its smooth opening and closing properties throughout repeated usage.

Before mounting and thereby fixating the window frame in regards to the transom, the frame must be held within the surrounding transoms and be kept in a horizontal position before the frame screw, frame sleeve or other fastening means are attached to the structure. Fastening elements such as frame screws and frame sleeves cannot on their own carry the weight of the frame, so additional building elements are also needed to support the weight of the frame. Even though the frame screws and frame sleeves have adjustable properties, said adjustment can only be performed in a horizontal plane. It is therefore important for the end result that the window frame is positioned within the surrounding transoms completely horizontal before the fastening means are applied.

An easy and common way to mount a window frame is to simply put different blocks and wedges on the lower transom, under the lower side of the window frame, and putting the window frame on said block. After necessary adjustments and establishing that the frame is horizontal with a spirit level or similar the fasting elements can be positioned on the sides and secure the frame into its correct position. This is however not a very efficient method as block and wedges of various sizes might not always be available. Blocks and wedges are also not standardized tools to use in a professional way.

NO333336 B1 discloses an adjustable support device intended to use instead of blocks and wedges. It is used by mounting at least one support device, preferably at least two, into the lower transom with a regular screwdriver or similar at the approximately correct height. The frame is then put directly on top of the at least one support device to roughly position the window frame in the correct position. The support device comprises a head with polygonal shape with flat surfaces adapted to fit to a wrench or similar, making it possible to adjust the insertion depth of the support device from the side as well. By engaging the support device with a wrench or similar from the side, between the frame and underlying transom, the frame can be adjusted about a vertical axis to achieve a horizontal level before applying the fastening elements to fixate the frame to the surrounding transoms. When using at least two support devices the devices can then be adjusted individually to achieve a corresponding tangential plane spanning between the support devices.

A problem with this type of support device is that the gap between the frame and the underlying transom can be quite narrow and it can be difficult to apply the wrench to the screw as it can be hard to see properly under the frame. This may lead to hitting the frame with the sharp edges of the wrench and thereby damaging the frame. Problems may also arise if the frame is either very heavy or made of a ductile material. The flat head of the support devices with its sharp edges formed by the polygonal shape can, if pressed into the material of the frame, get stuck in their positions and be hindered to be turned further. The devices can in this situation also cause the frame to drift horizontally when turned.

Therefore there is a need to come up with an improved level screw for window frames in building which eliminates drawbacks with prior art. Further, there is a need for a device which is easy to use in a hard to see situation. There is also a need for a level screw which will achieve reproducible and good results regardless of the material properties of the frame.

### SUMMARY OF THE INVENTION

The object of the present invention relates to a level screw as defined in the preamble of claim 1, and further defined by the features of the characterizing part of claim 1.

The purpose of the present invention relates to a level screw adapted to help achieve the correct orientation when mounting a building element in general, and a window frame in particular. A further purpose of the present invention is to achieve a stable support for the weight of the frame when mounted. Accordingly, there is provided a level screw adapted for adjusting a building element such as a window frame or door frame. The level screw comprises; a tip portion, a shaft portion comprising threads, and a head portion. The head portion further comprises a rear portion having a recess adapted to fit to a mounting tool and a front portion comprising nut shaped side walls adapted to fit to an adjustment tool. The level screw is characterized in that the head portion comprises a circumferential support projection arranged on the rear portion of the screw head. The projection comprises a rear side, a circumferential edge and a front side, wherein the projection extends substantially radially.

This has the advantage that a building element, such as a window frame in particular can be steadily supported by the support projection while necessary adjustments to the position of the frame are carried out. The extension of the support projection provides several further advantages for these types of operations. One advantage is that the corners of the edges of the nut cannot cut into the material of the frame as the frame is separated from the nut edges by the support projection. This is beneficial as if the edges of the nut shaped side walls cut into the frame, further adjustment may be impossible as the position of the screw head may get fixated by the frame.

Another advantage is that it the front side of the support projection acts as a support for the adjustment tool when it is engaged to the nut shaped side walls of the head portion. The frame is therefore protected from the sometimes sharp edges of the adjustment tool, which otherwise could risk producing splinters or chips of the frame material, further hindering the adjustment procedure. This also makes it easier for a person using the invention, as the adjustment can be performed even if the screw is placed in a small gap where visibility is low. When engaging the adjustment tool to the level screw, the user knows that the tool is in the right position when he/she feels the tool resting against the front side of the support projection.

In one example embodiment, the circumferential edge is a bevelled circumferential edge.

According to one aspect of the invention the rear side of the support projection has a bevelled edge.

This has the advantage that the level screw can rotate under the frame with lesser risk of the edge of the support projection cutting into the above resting frame. It is also beneficial to lessen the risk of vertical drifting of the frame when adjusting the screw with the adjustment tool, due to only parts of the head portion engaging the frame and moving it sideways. As such, a support projection with a bevelled edge contributes to decrease the risk of vertical drifting of the frame when adjusting the screw with an adjustment tool. To this end, a window frame or door frame placed on a support projection with a bevelled edge may be prevented from getting stuck on said edge of the support projection. The provision of having a bevelled circumferential edge is particularly beneficial when mounting level screws to larger and heavy frames.

In other words, the rear side of the support projection has a circumferential edge, wherein the circumferential edge may be a bevelled edge.

According to another aspect of the invention the rear side of the support projection is a convex surface.

This has the advantage that the contact surface of the rear side of the support projection towards the frame under which it is used will be the same even if the frame is not horizontal or if the level screw is not perfectly vertically mounted. With the contact surface being the tangential surface of the convex surface in engagement with the frame, the frame can be angled in relation to the level screw but still have sufficient support by the screw.

According to yet another aspect of the invention the tip portion comprises at least one cutting recess.

This has the advantage that the level screw will get a clean insertion into the underlying transom or foundation when mounted. This is advantageous for the following adjustment of the level screw as splinters or a deformed transom or foundation may hinder the adjustment tool and/or the adjustment procedure if there is excess material in the gap between the frame and underlying transom/foundation.

According to a further aspect of the invention the recess of the rear portion is adapted to fit to torx bits.

This has the advantage that the level screw can be mounted in a standardized manner.

According to yet a further aspect of the invention, the rear side of the projection is adapted to fit to an attachable gliding member.

This has the advantage that the level screw can easily be adapted for various situations by attaching a gliding member of different kind of shapes and sizes. Another advantage with using a separate gliding member is that the gliding member can be re-used if desirable. After the final mounting of the frame is done, by for example frame screws, the level screw can be fully inserted into the underlying transom/foundation and the gliding member removed and saved for later usage.

According to another aspect of the invention, the gliding member is attached to the rear side of the support projection, which gliding member comprises a rear surface, a front surface, and coupling means.

This has the advantage that the material properties of the gliding member can be used in various ways. The gliding member may for example be adapted for rotating against a frame more freely than the screw itself, making it easier to achieve a rotation with less friction without changing the mechanical properties of the level screw.

According to yet another aspect of the invention, the attachable gliding member is made of a polymer material.

This has the advantage that the gliding member is cheap and easy to manufacture. The mechanical properties of the gliding member may also be adapted for various mounting scenarios by using a polymer with certain material properties as needed.

According to a further aspect of the invention, the attachable gliding member is made of PTFE.

This has the advantage that the non-stick properties of the PTFE will cause very little friction against the frame when adjusting the level screw.

According to yet a further aspect of the invention, the diameter of the support projection is in the range of about three up to about four times the diameter of the shaft of the level screw.

This has the advantage that the large surface of the support projection will give a stable foundation for the frame without having the need to manufacture a level screw in a larger size to achieve the same effect. The large area of the support projection also lowers the friction against the frame as the weight of the frame is distributed over a larger total area.

### BRIEF DESCRIPTION OF FIGURES

Preferred embodiments of the invention will be further described with reference to the accompanying drawings.
Figure 1 shows a perspective view of a level screw according to an example embodiment of the present invention.
Figure 2 shows a top view of a level screw according to an example embodiment of the present invention, e.g. the example embodiment in fig. 1.
Figure 3 shows a bottom view of a level screw according to an example embodiment of the present invention, e.g. the example embodiment in fig. 1.
Figure 4a-d shows a side view of a level screw according to another example embodiments of the present invention.
Figure 5a-c shows a cross section view of a level screw according to other example embodiments of the present invention.
Figure 6 schematically shows a cross section view of a frame mounted with frame screws and two level screws according to an example embodiment of the present invention.

### DETAILED DESCRIPTIONS OF EXAMPLE EMBODIMENTS OF THE INVENTION

Herein example embodiments of the invention will be described in detail with reference to the appended drawings. As will be perceived the invention can be modified in various ways without departing from the scope of the claims. Thus the drawings should be viewed upon as illustrative in their nature and not restrictive. All drawings may not be made to scale.

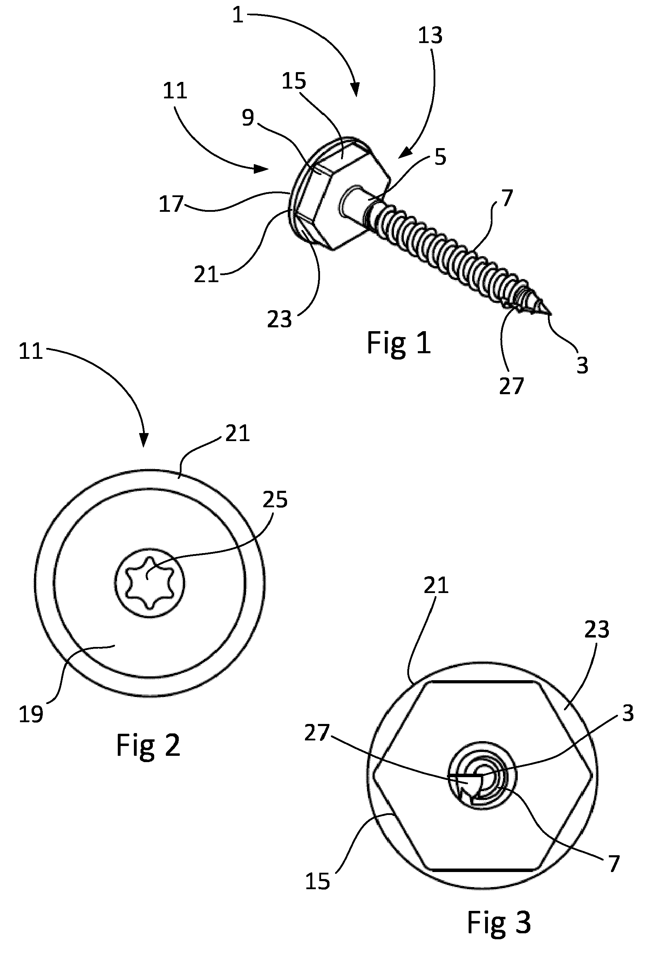

Figure 1 shows a perspective view of a level screw 1 according to a first embodiment of the present invention. The level screw 1 is adapted to assist positioning of a building element in general and a frame in particular before fixating the frame in its correct and final position by means of fastening elements such as frame screws or frame sleeves. As such, the level screw is adapted for adjusting a building element such as a window frame or door frame when mounting said frame to an adjacent transom with a gap there between. The level screw typically extends in an axial direction and in a radial direction. The level screw 1 comprises a tip portion 3, a shaft 5 comprising threads 7, and a head portion 9. The head portion 9 comprises a rear portion 11 having a recess adapted to fit to a mounting tool, and a front portion 13 comprising nut shaped side walls 15 adapted to fit to an adjustment tool. The head portion 9 further comprises a circumferential support projection 17 arranged on the rear portion 11 of the head portion 9. The projection 17 comprises a rear side 19, a circumferential edge 21, and a front side 23, wherein the projection 17 extends substantially radially. The head portion 9 of the level screw 1 is noticeable wider in relation to the shaft 5 of the screw when compared to a regular mounting screw. The diameter of the support projection 17 is preferably in the range of from about three up to about four times the diameter of the shaft 5 of the level screw 1. The support projection 17 is formed so as to at least cover the underlying nut shaped side walls 15 of the head portion 9 fully. In other words, the radius of the support projection 17 is equal or larger than the distance between the central axis of the level screw 1 and the corners of the nut shaped side walls 15. Preferably the support projection 17 will extend from the corners of the nut shaped side walls 15 in the range from about 0,1 mm to about 2 mm, and more preferably in the range from about 0,3 mm to about 0,7 mm.

The level screw 1 is primarily intended to use as an assisting element when mounting a frame to surrounding transoms and/or foundation. However, mounting of other building elements are also possible to assist with the level screw 1 of the present invention. The support projection 17 of the level screw 1 will give a stable support for the frame when put on top of it. The support projection 17 will also prevent the head portion 9 of the level screw 1 to cut into the material of the frame if the frame is either heavy, made of a ductile material or a combination of the two. If the nut shaped side walls 15 of the level screw 1 digs into the material of the frame further adjustments may become impossible due to the screw getting stuck in the frame. The support projection 17 also acts as guiding means for a user who is applying an adjustment tool to the nut shaped side walls 15 of the head portion 9. As the front side 23 of the support projection 17 is adjacent with the nut shaped side walls 15, a person using an example embodiment of the present invention will typically know that the adjustment tool is in the correct position when he/she feels the adjustment tool engages the front side 23 of the support projection. This also prevents the adjustment tool hitting the frame, which could risk damaging the frame material.

Figure 2 shows a top view of a level screw 1 according to example embodiments of the present invention, e.g. the example embodiment described in relation to fig. 1 above. In this view of the embodiment of the invention the recess 25 adapted to fit to the mounting tool is shown. The recess 25 is in this embodiment formed to fit a torx bit but other shapes of the recess 25 are possible for fitting other mounting tools. The mounting tool is used for the initial placement and insertion of the level screw 1 into the underlying transom or foundation.

This embodiment of the invention also features a bevelled circumferential edge 21 on the rear side 19 of the support projection 17. In other words, the circumferential edge is here a bevelled circumferential edge. This bevelled edge 21 further eliminates the risk of the level screw 1 digging into the material of the frame. A bevelled edge 21 also lowers the risk of the frame drifting sideways which may happen if the frame gets stuck on parts of the edge 21 of the rear side 19 of the support projection 17 when the level screw 1 is rotated.

The bevelled edge may refer to an inclined surface connecting a surface of the rear side 19 and the front side 23. In other design variants, the bevelled edge may connect a surface of the rear side with a part of the circumferential edge surface.

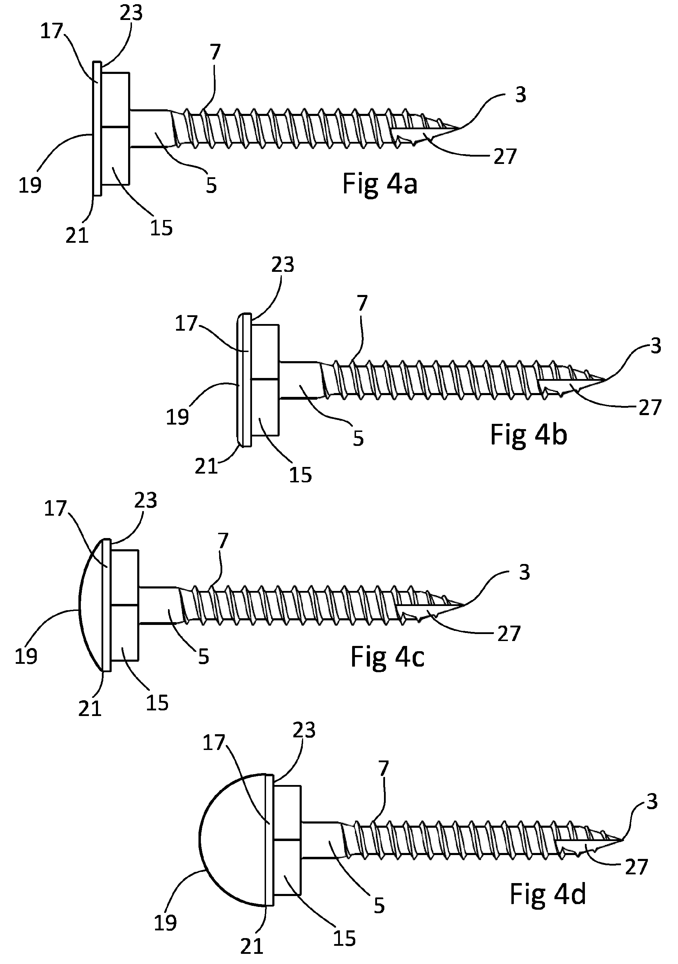

In an example embodiment as shown in e.g. fig. 2 and further described in conjunction with fig. 4b, the bevelled edge 21 may incline with an angle relative the radial direction of the level screw. As an example, the bevelled edge 21 may incline with an angle relative the radial direction of the level screw of about 5-60 degrees, preferably of about 10-30 degrees, more preferably of about 12-18 degrees.

It should also be readily appreciated that the bevelled edge is not necessarily a straight inclined edge, but may also be bevelled in a slightly curvilinear manner or the like.

Figure 3 shows a bottom view of a level screw 1 according to an example embodiment of the present invention. This view shows the tip portion 3 of the level screw 1 having a cutting recess 27. This cutting recess 27 is beneficial to get a clean cut into the material. Thus, the screw is being mounted with as little deformation of the surrounding material as possible. This may be useful as the gap between the frame and the underlying transom or foundation may be very small and excess waste material may hinder the following adjustment of the level screw 1. The front side 23 of the support projection 17 is also shown extending all around the nut shaped side walls 15, acting as support and guiding means for the adjustment tool. As the front side 23 of the support projection 17 is adjacent with the nut shaped side walls 15, a person using the present invention will know that the adjustment tool is in the correct position when he/she feels the adjustment tool engage the front side 23 of the support projection. This also prevents the adjustment tool hitting the frame, which could risk damaging the frame material.

Figure 4a shows a side view of a level screw 1 according to a fourth embodiment of the present invention. As seen in figure 4a the rear side 19 of the support projection 17 in this embodiment is a flat surface. A flat support projection 17 of this type may be used when mounting a frame between transoms and/or a foundation where the gap between said building elements is very small and thus giving little working space for the adjustment of the level screw 1.

Figure 4b shows a side view of a level screw 1 according to a fifth embodiment of the present invention. As seen in figure 4b the rear side 19 of the support projection 17 in this embodiment has a bevelled circumferential edge 21. The rear side 19 of the support projection 17 is flat and will produce a stable foundation for the above frame to rest on, whilstthe bevelled edge 21 of the rear side 19 will prevent the level screw 1 to dig into the material of the frame which can happen if the frame is heavy, if the material of the frame is ductile or a combination of the two. This embodiment will also reduce the risk of drifting of the frame sideways as the edge 21 is less likely to dig into the material of the frame.

Figure 4c shows a side view of a level screw 1 according to a sixth embodiment of the present invention. As seen in figure 4c the rear side 19 of the support projection 17 in this embodiment is a convex surface. This will further reduce the risk of the edge of the support projection digging into the material of the frame in situations where the angle of the above lying frame and the axis of the level screw might not be a right angle. The convex surface of this embodiment also produces a very smooth adjustment procedure as the frame will have a uniform surface to glide on even if the angle of the frame changes throughout the adjustment operation. It is to be noted that a level screw may in some example embodiments include a combination of a bevelled circumferential edge, as described in relation to fig. 2 and 4a, and a convex surface as shown in fig. 4c.

Figure 4d shows a side view of a level screw 1 according to a seventh embodiment of the present invention. As seen in figure 4c the rear side of the support projection 17 in this embodiment is in general a convex surface, and in particular of a half globe shape. With a convex surface of greater radius the level screw 1 can be inserted into the underlying transom or foundation at an angle and still be used to adjust the above resting frame. A level screw 1 with this shape can also be used for situation where the frame may not have a horizontal base, as in the case of a diamond shaped window with a point of the diamond shape pointing downwards. It is to be noted that a level screw may in some example embodiments include a combination of a bevelled circumferential edge, as described in relation to fig. 2 and 4a, and a convex surface as shown in fig. 4d.

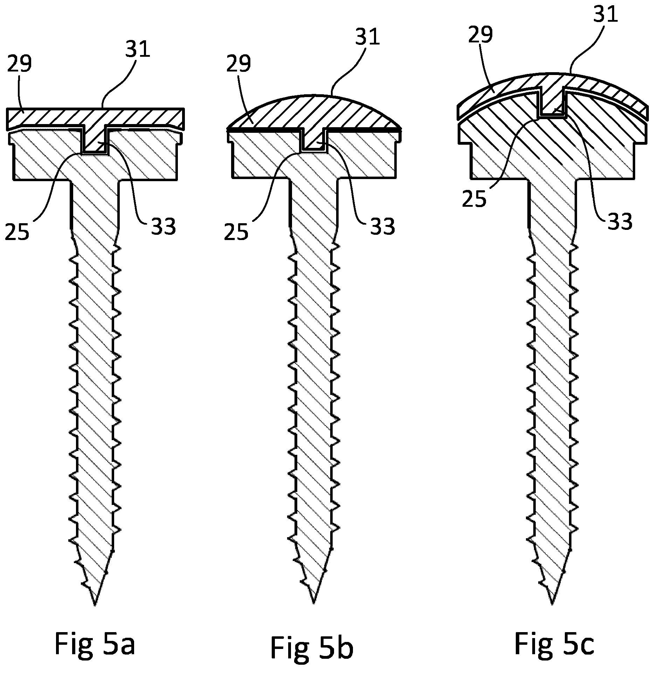

Figures 5a-c shows a cross section view of a level screw 1 according to an eighth, ninth, and tenth embodiment of the present invention. In these embodiments the level screw 1 is used in combination with a gliding member 29 adapted to fit into the recess 25 of the rear side 19 of the support projection 17 by attaching the gliding member 29 in the recess 25 of the rear side 19 of the support projection 17 by means of coupling means 33 of the gliding member 29. By using a gliding member 29 it is easy for the user to change the mechanical properties of the contact surface between the frame and the support projection 17 without changing the level screw 1 itself. This can be performed in multiple ways and combinations as will be explained more in detail for each of the figures 5a-c.

Figure 5a shows a cross section view of a level screw 1 according to an eighth embodiment of the present invention. In this embodiment a gliding member 29 with a flat rear surface 31 is used in combination with a level screw 1 comprising a bevelled edge 21 by attaching the gliding member 29 in the recess 25 of the rear side 19 of the support projection 17 by means of the coupling means 33 of the gliding member 29. An example of when this could be used is if the material of the frame creates high friction making it difficult to rotate the level screw 1 properly. The gliding member 29 is attached on top of the level screw 1 wherein the gliding member 29 can be made of a material with a lower friction coefficient than the level screw 1. Even if the gliding member 29 would not rotate freely against the above resting frame the level screw 1 may still rotate freely against the material of the gliding member 29 with its lower friction coefficient, creating a lubrication effect between the frame and the screw 1.

Figure 5b shows a cross section view of a level screw 1 according to a ninth embodiment of the present invention. In this embodiment a gliding member 29 comprising a convex rear surface 31 is being used in combination with a level screw 1 with a flat rear side 19 by attaching the gliding member 29 in the recess 25 of the rear side 19 of the support projection 17 by means of the coupling means 33 of the gliding member 29. An example of when this could be used is if the mounting of the frame requires another shape of level screw 1 than first expected. The frame might have an uneven surface underneath which can cause sticking and/or drifting problems which can be eliminated by adding the gliding member 29 instead of needing to change the screw.

Figure 5c shows a cross section view of a level screw 1 according to a tenth embodiment of the present invention. In this embodiment a gliding member 29 comprising a convex rear surface 31 is being used in combination with a level screw with a convex rear side 19 by attaching the gliding member 29 in the recess 25 of the rear side 19 of the support projection 17 by means of the coupling means 33 of the gliding member 29. An example of when this could be used is if the geometry of the screw 1 was chosen correctly but there are friction related problems between the screw 1 and the frame. The gliding member 29 can then be used to eliminate or lessen the friction related problems. As the recess 25 adapted for the mounting tool is more exposed to the frame in an embodiment with a convex rear side the gliding member 29 can also be used to eliminate the loss of contact surface due to the recess altogether.

The embodiments depicted in figures 5a-c using the gliding member 29 can all be used with the gliding member 29 being left in its position after the final mounting is performed. However, if a person using the present invention prefers so, he/she can after the final mounting of the frame lower the level screw 1 by inserting it deeper into the transom or foundation and simply remove the gliding member 29 to re-use it for mounting another frame or building element. After the removal of the gliding member 29, the level screw 1 must be brought back up into contact with the frame to support the weight of said frame.

The gliding member 29 can be manufactured in various shapes and sizes, the examples mentioned are not the only possibilities. The gliding member 29 can be made of a polymer material, metal, wood, or ceramics. If low friction and good gliding properties are wanted the gliding member 29 may, for example, be made of PTFE. If the gap between the underlying transom or foundation and the frame is to large, a gliding member 29 with sufficient thickness can also be used to bridge said gap without needing to use a longer level screw 1.

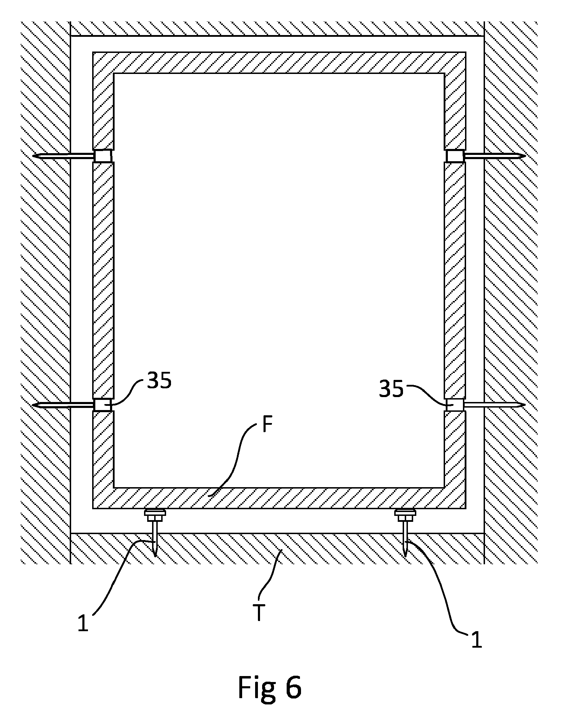

Figure 6 schematically shows a cross section view of a frame F mounted with frame screws 35 and two level screws 1 according to an example embodiment of the present invention as described herein or any other example embodiment. When mounting a frame F such as a window frame F according to figure 6, two level screws 1 are inserted into the transom T under which the frame F is about to be mounted. The mounting of the level screw 1 is performed with a mounting tool fitted in the recess 25 of the rear side 19 of the head portion 9. Preferably the level screws 1 are inserted to only part of their lengths to allow for the most room for adjustments. Typically there should be a gap between the frame F and the underlying transom T large enough for the level screws 1 to be inserted to about 70-80% of their total length. The frame F can then be placed on top of the level screws 1 for an initial positioning. As the level screws 1 has nut shaped side walls 15, adjustments of the screws 1 insertion depth are possible from the side of the level screws 1 after the frame F is positioned on top of said screws 1. The adjustment tool may be a regular wrench for example but other similar tools are also possible to use as long as they fit to the nut shaped side walls 15. By adjusting the level screws 1 insertion depth into the underlying transom T individually and checking the corresponding horizontal level of the frame F with a spirit level or similar, the frame F can be adjusted to sit in its correct position, securely supported by the level screws 1. When the correct position of the frame F is established the frame F can then be fixated by means of the frame screw 35 arranged at the sides of the frame F.

The invention is not limited to the specific embodiments presented. Combinations of features between different embodiments are possible. Accordingly, the drawings and the description thereto are to be regarded as illustrative in nature, and not restrictive.

## Claims

1. Level screw (1) comprising;
a tip portion (3),
a shaft (5) comprising threads (7), and
a head portion (9) comprising; a rear portion (11) having a recess (25) adapted to fit to a mounting tool, and a front portion (13) comprising nut shaped side walls (15) adapted to fit to an adjustment tool,
**characterized in that** the rear portion (11) of the head portion (9) comprises a circumferential support projection (17), the projection (17) comprising a rear side (19), a circumferential edge (21), and a front side (23), wherein the projection (17) extends substantially radially.

2. Level screw (1) according to claim 1, wherein the circumferential edge is a bevelled circumferential edge (21).

3. Level screw (1) according to claim 1, wherein the rear side (19) of the support projection (17) is a convex surface.

4. Level screw (1) according to any of the preceding claims, wherein the tip portion (3) comprises at least one cutting recess (27).

5. Level screw (1) according to any of the preceding claims, wherein the recess (25) of the rear portion (11) is adapted to fit to torx bits.

6. Level screw (1) according to any of the preceding claims, wherein the rear side (19) of the projection (17) is adapted to fit to an attachable gliding member (29).

7. Level screw (1) according to claim 6, wherein the gliding member (29) is attached to the rear side (19) of the support projection (17), which gliding member (29) comprises a rear surface (31), a front surface, and coupling means (33).

8. Level screw (1) according to claim 7, wherein the attachable gliding member (29) is made of a polymer material.

9. Level screw (1) according to claim 7, wherein the attachable gliding member (29) is made of PTFE.

10. Level screw (1) according to any of the preceding claims, wherein the diameter of the support projection (17) is in the range of from about three up to about four times the diameter of the shaft (5) of the level screw (1).
